(19) Europäisches Patentamt
European Patent Office
Office européen des brevets

(11) Publication number: **0 409 331 A2**

# (12) EUROPEAN PATENT APPLICATION

(21) Application number: **90201906.6**

(51) Int. Cl.$^5$: **C07F 7/18**

(22) Date of filing: **13.07.90**

(30) Priority: **18.07.89 US 381344**

(43) Date of publication of application:
**23.01.91 Bulletin 91/04**

(84) Designated Contracting States:
**AT BE CH DE DK ES FR GB GR IT LI LU NL SE**

(71) Applicant: **MERCK & CO. INC.NC.**
**126, East Lincoln Avenue P.O. Box 2000**
**Rahway New Jersey 07065-0900(US)**

(72) Inventor: **Hughes, David L.**
**298 Pewter Court**
**Old Bridge, NJ 08857(US)**

(74) Representative: **Hesketh, Alan, Dr. et al**
**European Patent Department Merck & Co., Inc. Terlings Park Eastwick Roadoad**
**Harlow Essex, CM20 2QR(GB)**

## (54) A novel process for the preparation of 2-diazo-3-trisubstituted silyloxy-3-butenoates.

(57) A novel process for preparing 2-diazo-3-trisubstituted silyloxy-3-butenoates, synthons useful in the conversion of 3-substituted-4-acetoxy azetidinones and penicillin to thienamycin, is provided, comprising the reaction of the appropriate diazo acetoacetate with the substituted silane, base and salt.

EP 0 409 331 A2

# A NOVEL PROCESS FOR THE PREPARATION OF 2-DIAZO-3-TRISUBSTITUTED SILYLOXY-3-BUTENOATES

## BACKGROUND OF THE INVENTION

The instant invention relates to a novel process for preparing 2-diazo-3-trimethylsilyloxy-3-butenoates.

1-(4-Nitrobenzyl)-1-oxo-2-diazo-3-(trimethyl silyloxy) butene has been described (U.S. Pat. 4,525,582) as a synthon used in the conversion of 3-substituted-4-acetoxy azetidinones and penicillin to thienamycin.

A different process than this invention for preparing one of the silyloxy-3-butenoates has been described (U.S. Pat. 4,683,296) wherein a triflate silylating agent and a base were reacted with a p-nitrobenzyl diazoacetoacetate. This patent makes specific reference to the "use of weaker organic bases such as trialkylamines with the triorganic silyl halide silylating agent" which "does not produce the desired enol silyl ester" of this specific p-nitrobenzyl diazoacetoacetate.

## DESCRIPTION OF THE INVENTION

Applicants now have discovered a practical and inexpensive process whereby the silyloxy 3-butenoate having the Formula 1:

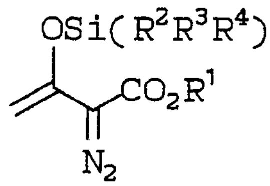

1

wherein $R^1$ is :

a) $C_1$-$C_6$ alkyl;

b) $C_1$-$C_6$ alkenyl;

c) phenyl substituted by 1-3 substituents which independently are: hydrogen, bromine, chlorine, fluorine, $C_1$-$C_4$ alkyl, $C_1$-$C_4$ alkoxy or nitro:

d) $C_1$-$C_4$ alkyl substituted by c) herein above;

e) benzhydryl or triphenyl methyl; $R^2$, $R^3$, $R^4$ are independently:

f) $C_1$-$C_4$ alkyl;

g) phenyl substituted by 1-3 substituents which independently are: hydrogen, $C^1$-$C^4$ alkyl;

h) -$OR^5$ where $R^5$, is f) or g) hereinabove; may be produced by the reaction of the readily accessible ketone intermediate of the Formula 2:

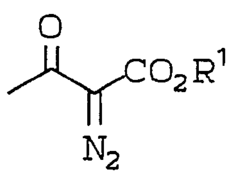

2

wherein $R^1$ is described hereinabove;

with a trisubstituted silyl halide of the Formula 3:

$(R^2R^3R^4)SiX$ 3

wherein $R^2$, $R^3$, $\bar{R}^4$ are described hereinabove and X is bromine or chlorine; in the presense of base, selected from: diisopropyl ethyl amine, DBU (1,8-diazabicyclo [5.4.0]undec-7-ene), DBN (1,5-diazabicyclo-[4.3.0] non-5-ene) and especially tri($C_1$-$C_4$) alkylamines (e.g. trimethylamine, triethylamine, tributylamine, triisopropylamine); and salt selected from: sodium iodide, potassium iodide or cesium iodide.

Alkyl, alkoxy, and alkenyl are intended to include linear and branched structures.

Alkyl, includes methyl, ethyl, propyl, isopropyl, butyl, sec- and tert- butyl and the like.

Alkenyl includes vinyl, allyl, isopropenyl, pentenyl, hexenyl and the like.

Alkoxy includes methoxy, ethoxy, propoxy, isopropoxy, butoxy and the like.

The trisubstituted silyl halide of formula 3 will hereafter be referred to as "triorganosilyl halide." The salt hereinabove will hereinafter be referred to as an "alkali metal iodide."

Preferably $R^1$ is: allyl, benzyl, benzhydryl, cinnamyl, p-bromobenzyl, p-methoxybenzyl, p-nitrobenzyl, o-nitrobenzyl, 2,4,6,-trimethylbenzyl or trityl.

Preferably $R^2$,$R^3$, $R^4$ are independently methyl, ethyl, isopropyl, t-butyl, phenyl and phenoxy.

Most preferably $R^1$ is p-nitropbenzyl.

Most preferably $R^2$, $R^3$, $R^4$ are methyl.

The general reaction for converting simple nonfunctionalized ketones to silyl enol ethers has been previously described by Cazeau, et al . ( Tetrahedron 1987 , 43, 2075-2088) but the conditions were not empolyed on complex multifunctional ketones as the instant invention describes.

The process of the instant invention whereby these results are obtained is illustrated in the following general reaction scheme:

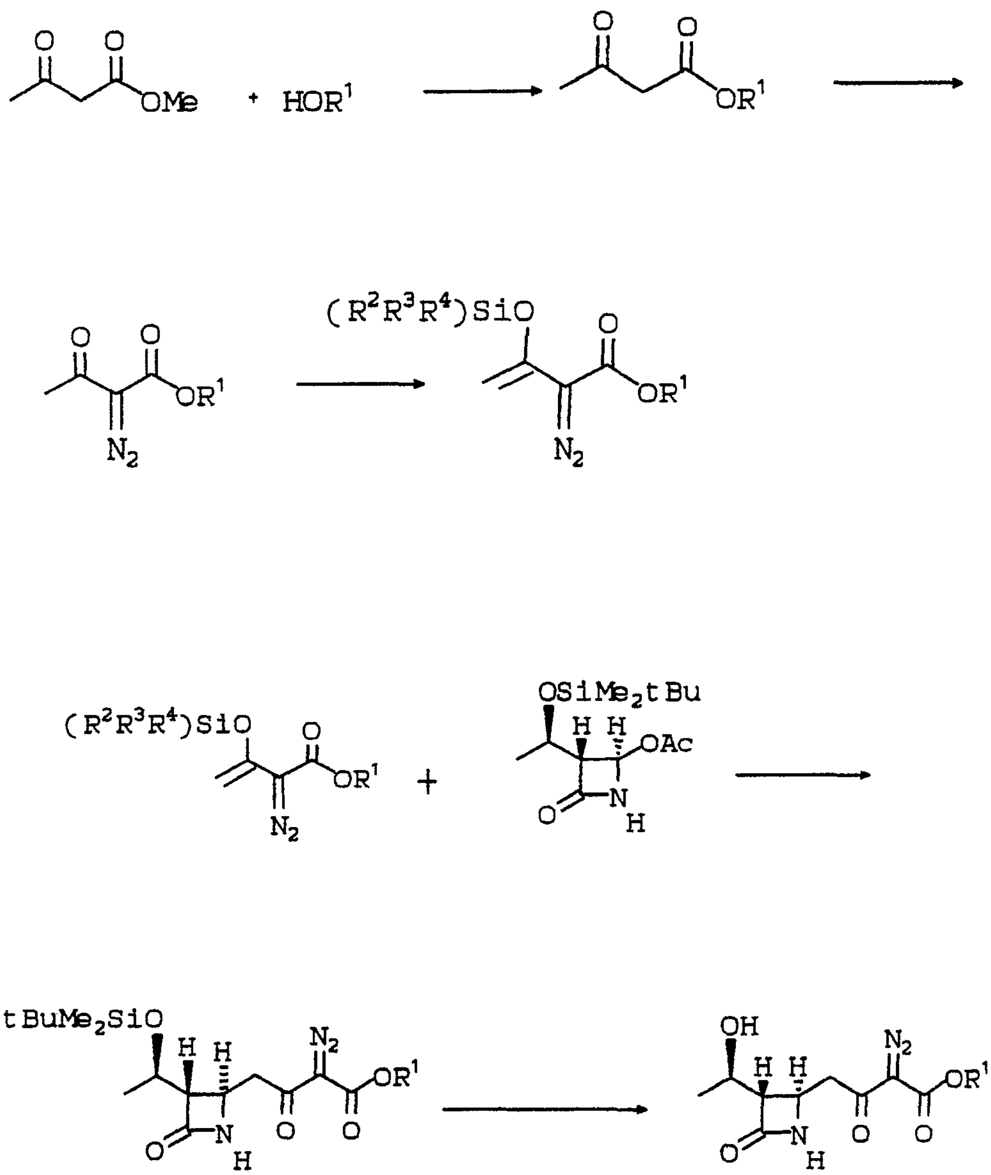

The commercially available methyl acetoacetate is treated with an equivalent molar amount of a suitably substituted alcohol in an inert atmosphere and the resulting acetoacetate treated with an equivalent of 4-dodecylbenzenesulfonyl azide and a catalytic amount of a base to produce the diazoacetoacetate.

The diazoacetoacetate is treated with an alkali metal iodide, a base and a triorganosilyl halide, all in slight molar excess, in a suitable aprotic organic solvent in an inert atmosphere. The resulting silyloxy butenoate may be isolated or employed in solution in a reaction with a molar equivalent of the acetoxy azetidinone and a catalytic amount of zinc bromide and, when the reaction is complete, this mixture is

treated with excess methanol and a catalytic amount of methane sulfonic acid. The final appended azetidinone is then isolated, for example by crystallization from the reaction solution.

A suitably substituted alcohol may be benzyl alcohol, p-methoxybenzyl alcohol, cinnamyl alcohol, allyl alcohol, p-bromobenzyl alcohol, o-nitrobenzyl alcohol, 2,4,6,-trimethylbenzyl alcohol, benzhydryl alcohol or trityl alcohol. The most preferred substituted alcohol is p-nitrobenzyl alcohol.

An inert atmosphere may be either nitrogen or argon gas.

The triorganosilyl halide may be any trialkyl ($C_1$-$C_4$ alkyl) silyl chloride (e.g. trimethyl silylchloride, triethyl silyl chloride, triisopropyl silyl chloride or t-butyl dimethyl silyl chloride) or it may be t-butyl diphenyl silyl chloride or (2,4.6-tri-t-butyl phenoxy) dimethyl silyl chloride or the corresponding silyl bromides of the above listed reagents. The most preferred silylating agent is trimethyl silyl chloride.

The alkali methal iodide may be sodium iodide, potassium iodide or cesium iodide.

A suitable aprotic organic solvent may be methylene chloride, tetrahydrofuran, carbon tetra-chloride, dioxane, dimethoxyethane, diethyl ether, chloroform, or acetonitrile. The reaction of the instant invention may be carried out at a temperature range of from about -40° C to 45° C.

The examples illustrate the present invention without, however, limiting the same thereto. All temperatures are expressed in degrees Celsius.

## EXAMPLE 1

### p-Nitrobenzyl Diazoacetoacetate

A solution of 156 g of p-nitrobenzyl alcohol (94% purity) and 125.8 g methyl acetoacetate in 900 ml toluene was refluxed for 18 hours through a Soxlet extractor containing 100 g 4A molecular sieves. The sieves were replaced after 3 hours and 9 hours. The solutions were then cooled to 20° C and 20.5 g triethyl amine were added, followed by a 200 ml solution of 387 g of p-dodecyl benzene sulfonylazide in heptanes over 0.5 hours. The reaction temperature was maintained at 25-30° C. The solution was aged at 25° C for 1.5 hours, then at 5° C for 4 hours. The resulting mixture was filtered and the collected solid product was washed with 2 x 50 ml toluene and 2 x 100 ml heptanes. The product was then dried under vacuum to give 208 g of p-nitrobenzyl-2-diazoacetoacetate having a purity of 95% as measured by NMR.

## EXAMPLE 2

### (3S,4R)-3-[(R)-1′hydroxy ethyl] 3-diazo, 2-dioxo-4-azetidinone butanoic Acid p-nitro benzyl ester

Step A : 4-Nitrobenzyl-2-diazo-3-trimethyl silyloxy-3-butenoate.

27.7 g of p-nitrobenzyl 2-diazoacetoacetate (95% purity) and 17.5 g of sodium iodide was dissolved in 35 ml of acetonitrile under an nitrogen atmosphere. 11.7 g of triethylamine and 12.4 g of chlorotrimethyl silane were added consecutively and the exothermic reaction mixture warmed to 45° C. The reaction mixture was stirred for 0.5 hours, then diluted with 225 ml of toluene. 52 ml of the solvent was distilled off at 120mm vacuum pressure and the mixture then stored at 5° C for 1 hour. The mixture was then filtered through Celite under nitrogen atmosphere and the product-containing-filtrate diluted to give a total volume of 280 ml.

Step B:

To the solution of the silyloxybutenoate from Step A above was added 25.7 g of (3S, 4R)-1-(t-butyl dimethyl silyl)-3-[(R)-1-t-butyl dimethyl silyloxyethyl]-4-acetoxy azetidin-2-one and 2.84 g of anhydrous zinc bromide. The reaction mixture was stirred for 48 hours at ambient temperature. At the end of the reaction time, 30 ml methanol and 1.63 g of methanesulfonic acid were added and the mixture was stirred for 48

hours at 20° C. At the end of this 48 hours the solid product was filtered, washed with toluene and vacuum dried 6 hours at 40° C to give 29.77 g of the title compound having 94% purity by NMR.

NMR ($CDCl_3$, TMS) δ 1.3 (d, 3H); 1.9 (s,1H); 2.9 (dd, 1H); 3.2 (m, 2H); 4.0 (m, 1H); 4.2 (s,1H); 5.4 (s, 2H); 6.0 (s, 1H); 7.5 (d, 2H); 8.3 (d, 2H).

The subject matter which applicants regard as their invention is particularly pointed out and distinctly claimed as follows.

## Claims

1. A process for the preparation of 2-diazo-3-trisubstituted silyloxy 3-butenoate ester of the Formula 1:

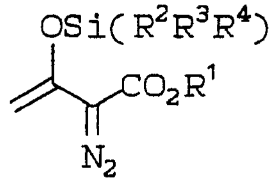

1

wherein $R^1$ is:
a) $C_1$-$C_6$ alkyl;
b) $C_2$-$C_6$ alkenyl;
c) phenyl substituted by 1-3 substituents which independently are: hydrogen, bromine, fluorine, $C_1$-$C_4$ alkyl, $C_1$-$C_4$ alkoxy or nitro;
d) $C_1$-$C_4$ alkyl substituted by c) herein above;
e) benzhydryl or trityl;
$R^2$,$R^3$, $R^4$ are independently selected from:
f) $C_1$-$C_4$ alkyl;
g) phenyl substituted by 1-3 substituents which independently are: hydrogen or $C_1$-$C_4$ alkyl;
h) -$OR^5$ where $R^5$ is f) or g) hereinabove;
which comprises the reaction of the diazoacetate of the Formula 2:

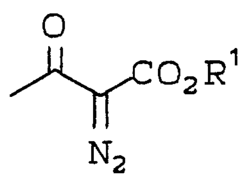

2

wherein $R_1$ is described hereinabove; and a trisubstituted silyl halide of the Formula 3:
$(R^2R^3R^4)SiX$ 3
wherein $R^2$, $R^3$, $R^4$ are described herein above and X is bromine or chlorine with a base which is: diisopropyl ethyl amine, DBU, DBN or tri($C_1$-$C_4$) alkylamines; and a salt selected from sodium iodide, potassium iodide and cesium iodide.

2. The process of Claim 1 wherein $R^1$ is $C_2$-$C_4$ alkenyl or $C_1$-$C_4$ alkyl substituted by phenyl which is substituted by: hydrogen, bromine, $C_1$-$C_4$ alkyl, $C_1$-$C_4$ alkoxy, or nitro; $R^2$, $R^3$, $R^4$ are independently $C_1$-$C_4$ alkyl, phenyl or phenoxy.

3. The process for the preparation of 2-diazo-3-trisubstituted silyloxy 3-butenoate ester of the Formula 1:

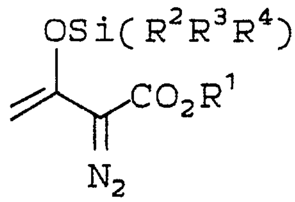

1

wherein $R^1$ is allyl, benzyl, benzhydryl, cinnamyl, p-bromobenzyl, p-methoxybenzyl, p-nitrobenzyl, o-nitrobenzyl, 2,4,6-trimethylbenzyl or triphenylmethyl; $R^2$, $R^3$, $R^4$ are independently $C_1$-$C_4$ alkyl; which comprises the reaction of the diazoacetate of the Formula 2:

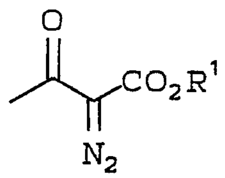

2

and a trisubstituted silyl chloride of the Formula 3:

$(R^2R^3R^4)SiCl$ 3

wherein $R^2$, $R^3$, $R^4$ are described hereinabove; with a base which is a tri($C_1$-$C_4$ alkyl) amine; and a salt which is potassium iodide or sodium iodide.

4. The process of Claim 3 wherein $R^1$ is p-methoxybenzyl or p-nitrobenzyl and $R^2$, $R^3$, $R^4$ are independently selected from methyl, ethyl or t-butyl.

5. A process of Claim 3 wherein $R^1$ is p-nitrobenzyl and $R^2$, $R^3$, $R^4$ are each methyl, the base is triethyl amine and the salt is sodium iodide.